# EUROPEAN PATENT SPECIFICATION

(11) **EP 0 388 126 B1**
(45) Date of publication and mention of the grant of the patent: **04.05.1994**
(21) Application number: 90302616.9
(22) Date of filing: 12.03.1990
(51) Int. Cl.: H02G 9/10

(54) **Underground junction boxes**
Unterirdischer Verbindungskasten
Boîte de jonction souterraine

(30) Priority: 11.03.1989 GB 8905756
(43) Date of publication of application: 19.09.1990
(73) Proprietor: INTEGRAL LTD, GB-Camberley Surrey GU15 3HZ (GB)
(72) Inventor: Portwood, Robert William, Fleet, Hants (GB)
(74) Representative: Harman, Michael Godfrey

(56) References cited:
- DE-A- 2 106 482
- GB-A- 23 561
- US-A- 3 027 416
- US-A- 3 521 537

## Description

The present invention relates to buried junction boxes.

There are many forms of public utility and other cabling in which cables are run underground between a variety of buildings. Such cables may be, for example, power cables, telephone cables, and TV cables; in the case of signal cables, the cables may be electrical or fibre optic cables. Access to such cables is required at suitable intervals, and is generally provided by means of underground junction boxes. In addition to these large junction boxes, there are small junction boxes which also require burying.

A junction box design has been proposed by Traupe (DE 21 06 482, GB 1 344 590) for use in conjunction with electric cable ducting and trunking in floors, walls, and ceilings of buildings.

In this design, the junction box is provided with a temporary lid and placed over the ducting or trunking during the construction of the building. Coating concrete or plaster is then laid, covering the box. After setting, the concrete or plaster is broken away to reach the temporary lid, which is removed. (This lid has a resilient pin which springs up through the concrete or plaster as it is being laid, to enable the box to be readily located.)

A permanent cover frame is then attached to the box. The cover frame consists of a tube, the outer end of which has an inner flange or rim to receive a cover plate and the inner end of which fits closely within the open end of the box. This cover frame is slid into the open end of the box to the desired position and fixed in place by bolting or adhesive, a cover plate is placed on it, and the surrounding concrete or plaster is made good (repaired). This allows the cover to be accurately located relative to the surface of the concrete or plaster.

Another junction box, of small size, is shown in Kissel (US 3 027 416). This is a generally cylindrical box with a circular cover. The cover is attachable to an adjustment ring which screws into the opening of the box; the ring is screwed in to whatever extent is necessary to bring the cover level with the surrounding floor or other surface.

A further similar arrangement is shown in Taylor (US 4 230 234). This shows a cylindrical meter box, for burial in the ground, with a cover which can be screwed into the main body of the box to adjust the level of the top of the cover to a desired level.

With public utilities such as telephone and mains power distribution systems, using junction boxes buried in public locations such as roads and footways, the boxes required are normally considerably larger that the boxes described above, eg with dimensions of the order of a metre. They are buried so that their upper face is flush with the ground surface. Their upper face consists of a removable plate, allowing access to the cables in the box.

With these boxes, as with the prior art boxes described above, it is necessary to arrange for their top surfaces to be flush with the ground surface.

These large boxes are naturally used most frequently in locations where there is a lot of traffic, foot or vehicular, and the ground surface is therefore usually metalled.

Over the course of time, such metalled surfaces become worn. The primary effect of such wear is a change of the character of the surface of the metalling, usually resulting in increased slipperiness. As time goes on, such surfaces also suffer localized damage, often as a result of particular parts being dug up. Such surfaces therefore require periodic resurfacing. It is very expensive to remove the existing surfacing, and it is therefore common for such resurfacing to consist of laying a fresh layer of metalling on top of the existing surface. This results in the level of the surface being raised.

A particular problem thus arises with these large buried junction boxes, because their top surface has to be raised to the new surface level. If the box is constructed of brick, then there will be a frame mounted on the top of the brick courses, and this frame has to be removed, the top course of bricks has to be raised (e.g. by adding a fillet of concrete round it), and the frame rebedded.

Junction boxes are often now constructed of plastics material. These present a more difficult problem when their top surface has to be raised, because the box is generally an integral structure. It is generally necessary for a separate frame to be mounted on the top of the box and for the top rim of the box to be cut off to make room for the additional frame, or alternatively for the complete box to be reinvested (that is, removed and replaced at its new level). These procedures are inconvenient and costly.

With the Traupe box, the level of the surface in which it is located is unlikely to change (unless the building undergoes major structural alteration). This box is not designed to allow for such changes, and in fact cannot conveniently accommodate such changes, as in this box, once the the cover frame has been fixed in position it cannot thereafter be re-adjusted.

At first sight, the Kissel and Taylor boxes will permit re-adjustment of their height after the original installation. However, the technique used for these boxes does not scale up to large boxes, since if the size of the opening is increased, the increasing resistance of the screw thread makes it difficult or impossible to turn the cover in the main body of the box. Further, the engagement of the cover in the main body is likely to be become seized up (locked in) over a period of months or years of exposure to the elements, so that it will be impossible to shift the cover. Also, of course, the cover is necessarily circular, while square or rectangular boxes are often preferable.

The primary purpose of the present invention is to provide an improved junction box in which this problem is alleviated or overcome.

Accordingly the present invention provides a junction box, for burial with its top surface flush with the ground, comprising a head portion and a main body, the head portion comprising a sleeve formed at its upper end as a frame for supporting a cover and the main body having its upper part formed as a parallel-sided throat within which the inner sleeve of the head is slidable, *characterized* *in that* the head portion carries at its upper end external flange means extending outward beyond the throat of the main body, by means of which the head portion can be supported and held in a desired position by surrounding material such as concrete.

Since the head portion need not be supported directly by the top of the main body, this arrangement allows the fit of the head portion in the throat of the main body to be free or loose. This not only minimizes the chance of the head portion becoming bound in position to the main body, so allowing it to be readily freed and raised to match a raised ground surface, but also allows the head portion to be tilted slightly relative to the main body should the ground surface become misaligned with the level of the main body.

The two portions are preferably both formed of structural plastics material.

The head portion comprises a sleeve formed at its upper end as a frame for supporting a cover. The frame preferably consists of a seating surrounded by a rim with an inverted U section, with vertical fins formed in the U section and extending downwards beyond the lower outer edge of the rim to part way down the outside of the sleeve. The fins provide an initial location for the head portion relative to the main body, from which the head portion may be raised by inserting a supporting fillet on the flange of the main body, or lowered by cutting away the fins where they extend below the lower outer edge of the rim, the main body preferably having an outward flange around its upper edge.

The main body may have an open bottom and an outward flange around its lower edge, and a plurality of vertical fins formed around its sides and in contact with the bottom outer flange, the spacing of the fins preferably being slightly larger than the maximum standard cable size.

A set of junction boxes in accordance with the invention will now be described, by way of example, with reference to the drawings, in which:
Fig. 1 is a vertical section through a box;
Fig. 2 is a plan view of half of the box of Fig. 1;
Fig. 3 is an end view of the box of Fig. 1; and
Fig. 4 is a vertical section through the main body of a larger box.

Referring to the drawings, a box consists of a main body 10 and a head portion 20. The upper part of the main body 10 is formed as a parallel-sided throat 11 with an outward flange 14 around its upper edge, and the head portion 20 comprises a sleeve portion 21 and a frame 22, the sleeve 21 sliding in the throat 11. The main body and the head portion are both made of plastics material, and formed by injection moulding.

In more detail, the main body 10 has a lower vertical-sided region 12, and an expansion region 13 formed between the throat 11 and region 12. Outward flanges 14 and 15 are formed around the top and bottom edges respectively. The shape of the main body 10 is broadly rectangular, with the corners (particularly of the region 12 and the lower flange 15) rounded.

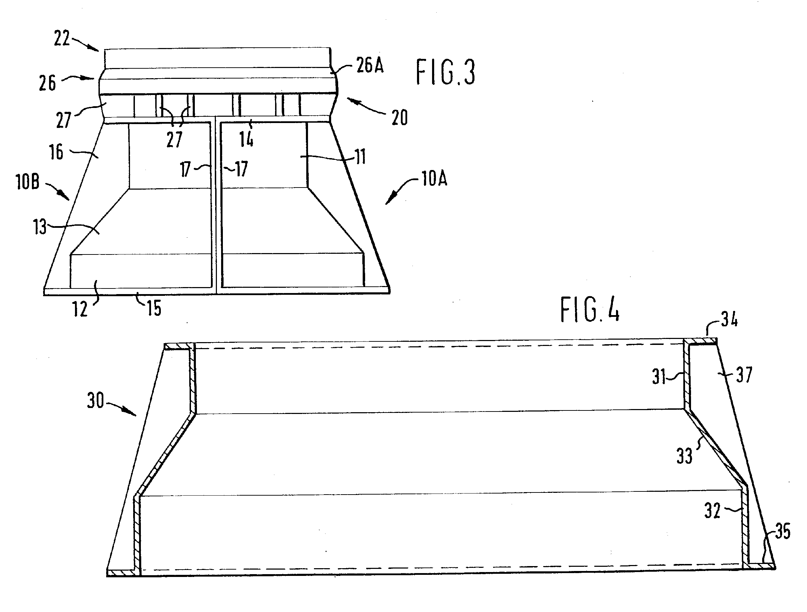

The main body 10 is formed from two identical halves 10A and 10B; only half 10A is shown in Fig. 2. A plurality of strengthening fins 16 are formed along the long side of each half, as shown in Fig. 2; the mating faces of the halves are formed as similar fins 17. The fins 17 are preferably provided with joining means (not shown) such as bolt holes or interlocking tabs and recesses, so that the two halves can be joined firmly together. The spacing of the fins 16 is chosen to be slightly greater than the maximum expected diameter of the cables to be joined in the box, so that holes may be cut for the cables between the fins; a suitable spacing is 100 mm.

The frame 22 of the head portion 20 comprises a horizontal seating 23, and a rim having an inverted U section and formed by a vertical retaining portion 24, a top horizontal face 25, and an outer skirting 26 with an expansion section 26A as shown. The seating 23 has inwards projections 28 in two diagonally opposite corners with holes 28A. A plurality of fins 27 are provided at intervals around the frame.

In use, a hole is dug to receive the box, and a concrete base is formed at the bottom of the hole. The main body 10, which is open at the bottom, is placed on the concrete base, and the head portion 20 is placed in engagement with the main body. The concrete base is preferably constructed at such a depth below the ground surface that the top horizontal face 25 of the rim 22 is level with the ground surface when the bottom edges of the fins 27 rest on the flange 14. A conventional cover (not shown), e.g. of cast iron, is placed in the frame 22 to close the box; this cover can be fixed in position by fixing means (not shown) engaging with the holes 28A.

If the box is in a location where only light traffic, e.g. foot traffic, is expected, then the box can be invested with earth. If however heavy traffic, e.g. vehicular traffic, is expected, then the box is invested in concrete of at least 50 mm thickness, to provide greater strength than that of the box itself. It will be noted that the rim of the head portion is hollow, and the concrete preferably fills it to give added strength to the rim. The widening of the rim hollow towards its bottom assists the entry of concrete into it.

The investing earth or concrete lying over the expansion region 13 and the lower flange 15 of the main body 10 exert a strong influence against possible upwards displacement of the main body.

The fins 27 provide an initial location for the head portion 20 relative to the main body 10. If the ground surface is raised, the head portion 20 may be raised by removing the investing earth or concrete round it, removing it from the main body 10, inserting a supporting fillet of concrete or cement on the flange 14 of the main body 10, re-engaging the head portion 20 with the main body 10 so that the fins 27 rest on that supporting fillet, and reinvesting the head portion with earth or concrete. If the ground surface is lowered, the head portion may be lowered by removing the investing earth or concrete round it, removing it from the main body 10, cutting off the lower edges of the fins 27, re-engaging the head portion 20 with the main body 10 so that the shortened fins 27 rest on the flange 14, and reinvesting the head portion with earth or concrete.

The fit between the sleeve 21 of the head portion 20 and the throat 11 of the main body 10 is preferably tight enough to minimize the pasage of concrete between the sleeve and the throat, but loose enough to allow the head portion to be tilted to a reasonable degree, in case the surface of the ground should become sloping relative to the main body 10.

The dimensions of the box may be chosen to be of any suitable values. For greater flexibility, a range of boxes is preferably produced; a range of 3 sizes is preferred. For each box size below the largest, the size of the lower flange of its main body is preferably the same as the size of the upper flange of the next box size up. This arrangement means that if a particularly deep junction box is required, then two main bodies of successive sizes can be placed the smaller one above the larger. Alternatively, of course, two identical main bodies can be used, with the lower one inverted. The flanges which may mate together are preferably provided with joining means (not shown) such as bolt holes or interlocking tabs and recesses.

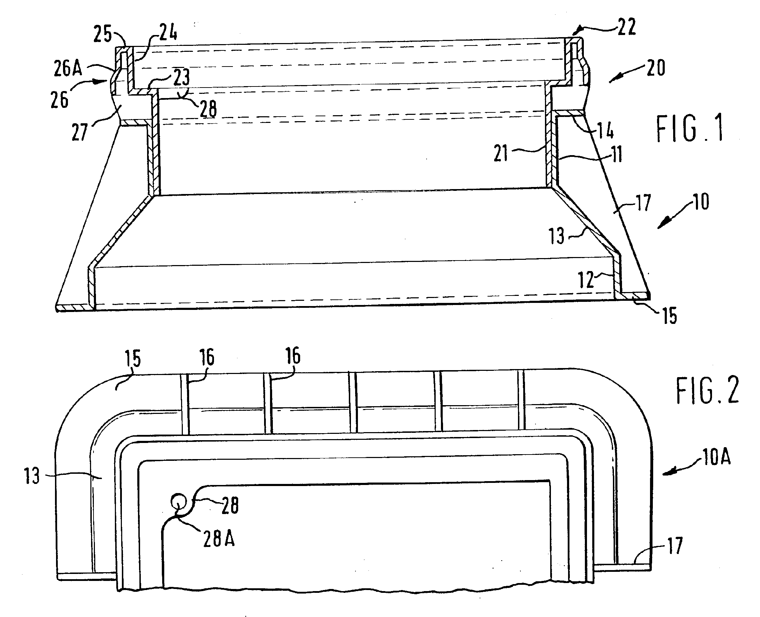

Fig. 4 shows the main body 30 of the next size of box up from that of Figs. 1 to 3, to the same scale. The units digits of the reference correspond to those of Figs. 1 to 3. It will be seen that the upper flange 34 matches the lower flange 15 of the main body 10 of the box of Figs. 1 to 3.

The main body 30 shown in Fig. 4 has the heights of its throat 31 and its lower vertical-sided region 32 substantially equal. This means that this body can be used in either orientation - as shown or inverted - with an appropriately-sized head portion. If a range of box sizes is provided, then the same principle can be used for all sizes.

## Claims

1. A junction box, for burial with its top surface flush with the ground, comprising a head portion (20) and a main body (10), the head portion comprising a sleeve (21) formed at its upper end as a frame (22) for supporting a cover and the main body (10) having its upper part formed as a parallel-sided throat (11) within which the inner sleeve (21) of the head (20) is slidable, *characterized* *in* *that* the head portion (20) carries at its upper end external flange means (23-26) extending outward beyond the throat (11) of the main body (10), by means of which the head portion can be supported and held in a desired position by surrounding material such as concrete.

2. A junction box according to claim 1 *characterized* *in that* the two portions are both formed of structural plastics material.

3. A junction box according to either previous claim *characterized in that* the upper end of the head portion consists of a seating (23) surrounded by a rim (24-26) with an inverted U section and forming the flange means.

4. A junction box according to any previous claim *characterized in that* the head portion (20) has a plurality of vertical fins (27) extending downwards beyond the lower outer edge of the rim to part way down the outside of the sleeve.

5. A junction box according to any previous claim *characterized in that* the main body (10) has an outward flange (14) around its upper edge.

6. A junction box according to claim 5 *characterized in that* the main body (10) has an expansion region (13) below the throat (11) so that the bottom is larger than the throat.

7. A junction box according to any previous claim *characterized in that* the main body (10) has an open bottom and has an outward flange (15) around its lower edge.

8. A junction box according to claim 7 *characterized in that* the main body (10) has a plurality of vertical fins (16) formed around its sides and in contact with the bottom outer flange (15).

9. A junction box according to claim 8 *characterized* *in that* the spacing of the fins (16) of the main body is slightly larger than the maximum standard cable size.

10. A set of junction boxes of graded sizes each according to any one of claims 7 to 9 *characterized in that* the upper flange of the body of each size (eg 30) matches the lower flange of the next size down (10).

11. A set of junction boxes according to claim 10 *characterized in that* the main bodies are reversible bottom to top.

## Patentansprüche

1. Verbindungskasten, der so einzugraben ist, daß er mit seiner oberen Oberfläche bündig mit der Grundfläche ist, mit einem Kopfteil (20) und einem Hauptkörper (10), wobei der Kopfteil eine an seinem oberen Ende ausgebildete Hülse (21) als Rahmen (22) besitzt, um einen Deckel abzustützen, und der Hauptkörper (10) mit seinem oberen Teil als Hals (11) mit parallelen Seiten geformt ist, innerhalb dessen die innere Hülse (21) des Kopfteiles (20) verschiebbar ist, dadurch gekennzeichnet, daß der Kopfteil (20) an seinem oberen Ende äußere Flanschmittel (23-26) trägt, die sich über den Hals (11) des Hauptkörpers (10) hinaus nach außen erstrecken, mittels denen der Kopfteil abgestützt und in einer gewünschten Stellung mittels umgebenden Materials, beispielsweise Mörtels, abgestützt und gehalten werden kann.

2. Verbindungskasten nach Anspruch 1, dadurch gekennzeichnet, daß die zwei Teile beide aus einem Baukunststoffwerkstoff geformt sind.

3. Verbindungskasten nach einem der vorausgehenden Ansprüche, dadurch gekennzeichnet, daß das obere Ende des Kopfteiles aus einer Auflagefläche (23) besteht, die durch eine Umrandung (24-26) umgeben ist, die einen Querschnitt in Form eines umgekehrten U besitzt und die Flanschmittel bildet.

4. Verbindungskasten nach einem der vorausgehenden Ansprüche, dadurch gekennzeichnet, daß der Kopfteil (20) eine Mehrzahl vertikaler Rippen (27) besitzt, die sich über den unteren äußeren Rand der Umrandung hinaus nach unten über einen Teil der Außenseite der Hülse hinaus nach unten erstrecken.

5. Verbindungskasten nach einem der vorausgehenden Ansprüche, dadurch gekennzeichnet, daß der Hauptkörper (10) rings um seinen oberen Rand einen äußeren Flansch (14) aufweist.

6. Verbindungskasten nach Anspruch 5, dadurch gekennzeichnet, daß der Hauptkörper (10) einen Erweiterungsbereich (13) unterhalb des Halses (11) aufweist, so daß der Boden größer ist als der Hals.

7. Verbindungskasten nach einem der vorausgehenden Ansprüche, dadurch gekennzeichnet, daß der Hauptkörper (10) einen offenen Boden und einen äußeren Flansch (15) rings um seinen unteren Rand aufweist.

8. Verbindungskasten nach Anspruch 7, dadurch gekennzeichnet, daß der Hauptkörper (10) eine Mehrzahl vertikaler Rippen (16) aufweist, die rings um seine Seiten und in Berührung mit dem bodenseitigen äußeren Flansch (15) ausgebildet sind.

9. Verbindungskasten nach Anspruch 8, dadurch gekennzeichnet, daß der Abstand zwischen den Rippen (16) des Hauptkörpers etwas größer ist als die Größtabmessung eines Standardkabels.

10. Satz mit Verbindungskästen abgestufter Größen, jeweils gemäß einem der Ansprüche 7 bis 9, dadurch gekennzeichnet, daß der obere Flansch des Körpers bei jeder Größe (z.B. 30) mit dem unteren Flansch der nächst kleineren Größe (10) zusammenpaßt.

11. Satz mit Verbindungskästen nach Anspruch 10, dadurch gekennzeichnet, daß die Hauptkörper, Unterseite nach oben, umwendbar sind.

## Revendications

1. Une boîte de raccordement destinée à être enterrée avec sa surface supérieure au niveau du sol, comportant une partie de tête (20) et un corps principal (10), la partie de tête comportant un manchon (21) dont l'extrémité supérieure est conformée en châssis (22) pour supporter un couvercle tandis que le corps principal (10) est conformé, à sa partie supérieure, en gorge (11) à cotés parallèles,à l'intérieur de laquelle le manchon interne (21) de la tête (20) est monté à glissement, caractérisée en ce que la partie de tête (20) porte à son extrémité supérieure des bordures externes (23-26) s'étendant vers l'extérieur au-delà de la gorge (11) du corps principal (10), grâce auxquelles la partie de tête peut être supportée et maintenue dans une position désirée à l'aide d'un matériau environnant tel que le béton.

2. Une boîte de raccordement selon la revendication 1, caractérisée en ce que les deux parties sont réalisées en matière plastique structurelle.

3. Une boîte de raccordement selon l'une quelconque des revendications précédentes, caractérisée en ce que l'extrémité supérieure de la partie de tête est constituée d'un siège (23) entouré par une couronne (24-26) présentant une section en U inversé et formant la bordure.

4. Une boîte de raccordement selon l'une des revendications précédentes, caractérisée en ce que la partie de tête (20) possède une pluralité d'ailettes verticales (27) s'étendant vers le bas au-delà du bord externe inférieur de la couronne afin de diviser vers le bas l'extérieur du manchon.

5. Une boîte de raccordement selon l'une quelconque des revendications précédentes, caractérisée en ce que le corps principal (10) possède une bride extérieure (14) autour de son arête supérieure.

6. Une boîte de raccordement selon la revendication 5, caractérisée en ce que le corps principal (10) présente une zone d'élargissement (13) en dessous de la gorge (11) de sorte que le fond est plus grand que la gorge.

7. Une boîte de raccordement selon l'une quelconque des revendications précédentes, caractérisée en ce que le corps principal (10) présente un fond ouvert et possède une bride dirigée vers l'extérieur (15) autour de son arête inférieure.

8. Une boîte de raccordement selon la revendication 7, caractérisée en ce que le corps principal (10) présente une pluralité d'ailettes verticales (16) formées autour de ses côtés et en contact avec la bride extérieure de fond (15).

9. Une boîte de raccordement selon la revendication 8, caractérisée en ce que l'espacement entre les ailettes (16) du corps principal est légèrement plus important que la dimension normalisée maximale du câble.

10. Un jeu de boîtes de raccordement de dimensions calibrées chacune, selon l'une quelconque des revendications 7 à 9, caractérisé en ce que la bride supérieure du corps de chaque dimension (par exemple 30) s'adapte à la bride inférieure de la dimension la plus proche.

11. Un jeu de boîtes de raccordement selon la revendication 10, caractérisé en ce que les corps principaux sont réversibles du bas vers le haut.
